# EUROPÄISCHE PATENTSCHRIFT

(11) **EP 1 365 620 B1**
(45) Veröffentlichungstag und Bekanntmachung des Hinweises auf die Patenterteilung: **14.06.2006**
(21) Anmeldenummer: 03090113.6
(22) Anmeldetag: 17.04.2003
(51) Int. Cl.: H04Q 7/38, H04L 29/06

(54) **Verfahren zum Registrieren eines Kommunikationsendgeräts in einem Dienstnetz (IMS)**
Method for registration of a communication terminal in a service network (IMS)
Procédé pour le rattachement d'un terminal de communication dans un réseau de service (IMS)

(30) Priorität: 22.05.2002 DE 10223248
(43) Veröffentlichungstag der Anmeldung: 26.11.2003
(73) Patentinhaber: SIEMENS AKTIENGESELLSCHAFT, 80333 München (DE)
(72) Erfinder: Kastelewicz, Georg, Dr., 10179 Berlin (DE); Kim, Peter, Dr., 12623 Berlin (DE)

(56) Entgegenhaltungen:
- WO-A-02/11469
- US-A- 4 919 545
- US-A1- 2002 012 433
- "Digital cellular telecommunications system (Phase 2+) (GSM); Universal Mobile Telecommunications System (UMTS); Interworking between the PLMN supporting Packet Based services and PDN (3GPP TS 29.061 version 5.1.0 Release 5)" ETSI TS 129 061 V5.1.0, März 2002 (2002-03), Seiten 30-35, XP002244387
- "Universal Mobile Telecommunications System (UMTS); 3G security; Access security for IP-based services (3GPP TS 33.203 version 5.1.0 Release 5)" ETSI TS 133 203 V5.1.0, März 2002 (2002-03), XP002244388

## Beschreibung

Bei Mobilfunknetzen der zweiten und dritten Generation werden Mobilfunknutzern Dienste angeboten, die von für eine Diensterbringung optimierten Spezialnetzen (Dienstnetzen) erbracht werden. Die Dienstnutzer werden dabei über ein Zugangsnetz (z.B. ein nach dem GPRS-Standard arbeitendes Kommunikationsnetz) mit dem Dienstnetz verbunden. Es ist oftmals für Netzbetreiber von Interesse, vor einer Diensterbringung die Identität der Dienstnutzer festzustellen und bei erfolgreicher Authentifizierung diese Nutzer zu registrieren.

Der Erfindung liegt die Aufgabe zugrunde, ein sicheres und zuverlässig arbeitendes Verfahren zum Registrieren eines Kommunikationsendgerätes eines Dienstnutzers anzugeben.

Die Aufgabe wird erfindungsgemäß gelöst durch ein Verfahren zum Registrieren eines Kommunikationsendgeräts bei einem einen Kommunikationsdienst organisierenden Dienstnetz, wobei ein kommunikationsendgeräteseitiger Zugriff auf das Dienstnetz über ein das Kommunikationsendgerät mit dem Dienstnetz verbindendes Zugangsnetz erfolgt, bei dem in einem Vorausschritt eine Anmelde-IP-Adresse, welche bei einem Anmelden des Kommunikationsendgeräts bei dem Zugangsnetz dem Kommunikationsendgerät zugeordnet wurde, von dem Dienstnetz empfangen und in diesem für den jeweiligen Nutzer des Kommunikationsendgerätes abgespeichert wird, bei Empfang einer von dem Kommunikationsendgerät gesendeten ersten Registrierungsnachricht ein Kennzeichen (Token) mittels einer Transportnachricht, die mit der Anmelde-IP-Adresse adressiert wird, zu dem Kommunikationsendgerät übertragen wird, wobei das Kennzeichen von dem Dienstnetz aus der Anmelde-IP-Adresse und einer Zufallszahl mittels eines Verschlüsselungsverfahrens erzeugt wurde und zu dem Kennzeichen gehörende Kennzeichen-Daten in dem Dienstnetz abgespeichert wurden, bei Empfang einer von dem Kommunikationsendgerät gesendeten zweiten Registrierungsnachricht, welche das Kennzeichen enthält, von dem Dienstnetz das empfangene Kennzeichen mit den Kennzeichen-Daten verglichen wird, bei Übereinstimmung des Kennzeichens mit den Kennzeichen-Daten ein erfolgreiches Registrieren erkannt wird, und bei Nicht-Übereinstimmung des Kennzeichens mit den Kennzeichen-Daten ein erfolgloses Registrieren erkannt wird.

Zwar ist aus der Druckschrift "3GPP TS 24.228 V5.0.0 (2002-03); Technical Specification; 3rd Generation Partnership Project; Technical Specification Group Core Network; Signalling flows for the IP multimedia call control based on SIP and SDP; Stage 3; (Release 5)" insbesondere aus S. 32 ein Verfahren zum Registrieren eines Kommunikationsendgerätes bekannt, bei diesem Verfahren wird jedoch von dem Dienstnetz ein sog. "Challenge"-Wert erzeugt und an das Kommunikationsendgerät gesendet, das daraufhin einen sog. "Response"-Wert mittels einer speziellen "ISIM"-Karte (ISIM = IMS SIM) des Kommunikationsendgerätes errechnet und in einer Antwortnachricht an das Dienstnetz zurücksendet. Dieses Verfahren erfordert daher spezielle Kommunikationsendgeräte und ein spezielles Zugangsnetz, welche Standardisierungsvorschriften der 3GPP "Release 5" entsprechen. Beispielsweise muß ein derartiges spezielles Kommunikationsendgerät mit einer "ISIM"-Karte ausgestattet sein.

Das erfindungsgemäße Verfahren benötigt jedoch vorteilhafterweise keine Kommunikationsendgeräte oder Zugangsnetze, welche Standardisierungsvorschriften der 3GGPP "Release 5" entsprechen. Vielmehr ist das erfindungsgemäße Verfahren auch mit den heute vorherrschenden Kommunikationsendgeräten und Zugangsnetzen einsetzbar, welche Standardisierungsvorschriften der 3GGPP "Release 1999" (auch als "Release 3" bezeichnet) genügen. Zum Beispiel sind heute gebräuchliche Kommunikationsendgeräte geeignet, welche lediglich eine herkömmliche "Subscriber Identity Module (SIM)"-Karte aufweisen. Ein weiterer Vorteil des erfindungsgemäßen Verfahrens besteht darin, dass das Kennzeichen nur sehr schwer "erraten" werden kann, da das Kennzeichen aus der Anmelde-IP-Adresse und einer Zufallszahl mittels eines Verschlüsselungsverfahrens erzeugt wird. Das Kennzeichen wird mittels einer Transportnachricht, die mit der Anmelde-IP-Adresse adressiert wird, zu dem Kommunikationsendgerät übertragen. Dadurch und durch das Routing im Zugangsnetz wird vorteilhafterweise sichergestellt, dass das Kennzeichen ausschließlich zu dem Kommunikationsendgerät mit der Anmelde-IP-Adresse gelangt, so dass im weiteren Verlauf des Verfahrens nur für dieses eine Kommunikationsendgerät eine erfolgreiche Registrierung stattfinden kann.

Das erfindungsgemäße Verfahren kann so ausgestaltet sein, dass in dem Dienstnetz als Kennzeichen-Daten das Kennzeichen abgespeichert wird, bei dem Vergleich des empfangenen Kennzeichens mit den in dem Dienstnetz abgespeicherten Kennzeichen-Daten das empfangene Kennzeichen mit dem abgespeicherten Kennzeichen verglichen wird, und bei Übereinstimmung des empfangenen Kennzeichens mit dem abgespeicherten Kennzeichen ein erfolgreiches Registrieren erkannt wird. Bei dieser Ausgestaltung des Verfahrens ist besonders vorteilhaft, dass das Registrieren auf eine besonders einfache Weise ausgeführt werden kann, da in lediglich einem Vergleichschritt das empfangenen Kennzeichen mit dem abgespeicherten Kennzeichen verglichen werden braucht. Dazu ist auch kein Entschlüsseln der Kennzeichen notwendig, so das die Ressourcen des Dienstnetzes nur gering belastet werden.

Das erfindungsgemäße Verfahren kann auch so ausgestaltet sein, dass in dem Dienstnetz als Kennzeichen-Daten die Anmelde-IP-Adresse und die Zufallszahl abgespeichert wird, nach Empfang der zweiten Registrierungsnachricht von dem Dienstnetz eine Entschlüsselung des mit dieser zweiten Registrierungsnachricht übertragenen Kennzeichens vorgenommen wird, bei dem Vergleich des empfangenen Kennzeichens mit den in dem Dienstnetz abgespeicherten Kennzeichen-Daten die bei der Entschlüsselung zurückgewonnene Anmelde-IP-Adresse mit der abgespeicherten Anmelde-IP-Adresse verglichen wird, und bei Übereinstimmung der zurückgewonnenen Anmelde-IP-Adresse mit der abgespeicherten Anmelde-IP-Adresse ein erfolgreiches Registrieren erkannt wird. Diese Ausführungsform erlaubt vorteilhafterweise auf eine unaufwendige Art und Weise eine Weiterverarbeitung der Anmelde-IP-Adresse nach dem Registriervorgang, da diese nach dem Vergleich bereits im "Klartext" vorliegt.

Das erfindungsgemäße Verfahren kann auch so ablaufen, dass in dem Vorausschritt die Anmelde-IP-Adresse, welche bei einem Anmelden des Kommunikationsendgeräts bei dem Zugangsnetz dem Kommunikationsendgerät zugeordnet wurde, von dem Dienstnetz einer öffentlichen Kennung des Kommunikationsendgerätes zugeordnet wird, anhand der zurückgewonnenen Anmelde-IP-Adresse oder anhand des Kennzeichens die im Dienstnetz gespeicherte, zu der Anmelde-IP-Adresse zugeordnete öffentliche Kennung ausgelesen wird, nach Empfang der zweiten Registrierungsnachricht von dem Dienstnetz eine in dieser zweiten Registrierungsnachricht enthaltene öffentliche Kennung mit der ausgelesenen öffentlichen Kennung verglichen wird, und nur dann ein erfolgreiches Registrieren erkannt wird, wenn zusätzlich die in dieser zweiten Registrierungsnachricht enthaltene öffentliche Kennung mit der ausgelesenen öffentlichen Kennung übereinstimmt. Durch diesen zusätzlichen Vergleich kann eine noch höhere Sicherheit der Authentifizierung bei dem Registrieren erreicht werden.

Das erfindungsgemäße Verfahren kann so durchgeführt werden, dass nach Empfang der zweiten Registrierungsnachricht von dem Dienstnetz eine in dieser zweiten Registrierungsnachricht enthaltene private Kennung mit einer im Dienstnetz zusammen mit der öffentlichen Kennung abgespeicherten privaten Kennung verglichen wird, und nur dann ein erfolgreiches Registrieren erkannt wird, wenn zusätzlich die in dieser zweiten Registrierungsnachricht enthaltene private Kennung mit der im Dienstnetz abgespeicherten privaten Kennung übereinstimmt. Dadurch erhält man ein besonders sicheres Verfahren.

Das erfindungsgemäße Verfahren kann so gestaltet werden, dass zum Durchführen eines temporären Registrierens vom Dienstnetz ein dem Kennzeichen zugeordneter Kennzeichen-Zeitgeber bei der Absendung der Transportnachricht gestartet wird, und bei Verstreichen einer vorbestimmten Gültigkeitsdauer des Kennzeichens das Kennzeichen als ungültig markiert wird. Bei dieser Ausgestaltung des Verfahrens ist vorteilhafterweise das Kennzeichen nur eine gewisse Gültigkeitsdauer lang benutzbar. Sollte das Kennzeichen Unbefugten bekannt werden, so ist die Dauer einer eventuellen unerwünschten Benutzung begrenzt.

Bei dem erfindungsgemäßen Verfahren kann das Kennzeichen (Token) von einer Vermittlungsstelle des Dienstnetzes erzeugt werden.

Das Kennzeichen kann aber auch von einem Heimatregister des Dienstnetzes erzeugt werden.

Das Kennzeichen kann auch von der Vermittlungsstelle des Dienstnetzes entschlüsselt werden.

Das erfindungsgemäße Verfahren kann auch so ablaufen, dass durch eine Vermittlungsstelle des Dienstnetzes das empfangene Kennzeichen mit den Kennzeichen-Daten verglichen wird, durch die Vermittlungsstelle bei Übereinstimmung des Kennzeichens mit den Kennzeichen-Daten ein erfolgreiches Registrieren erkannt wird, und durch die Vermittlungsstelle bei Nicht-Übereinstimmung des Kennzeichens mit den Kennzeichen-Daten ein erfolgloses Registrieren erkannt wird.

Zur weiteren Erläuterung der Erfindung ist in
Figur 1 ein Ausführungsbeispiel einer Anordnung zur Ausführung des erfindungsgemäßen Verfahrens und in
Figur 2 eine schematische Darstellung eines Ausführungsbeispiels des erfindungsgemäßen Verfahrens dargestellt.

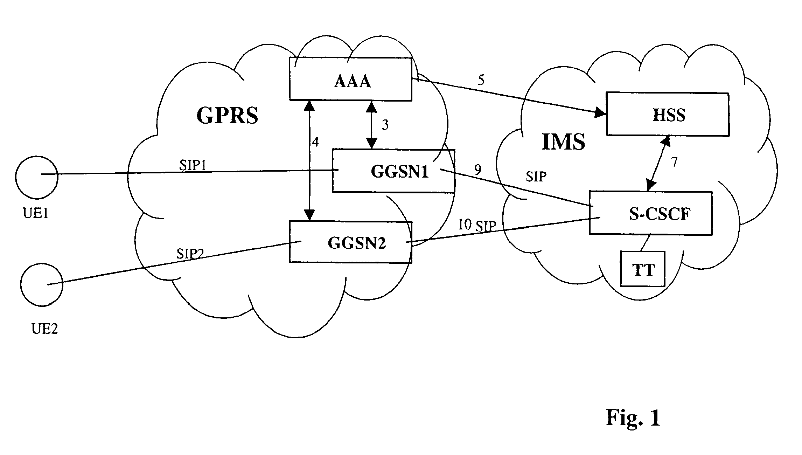

In Figur 1 ist als Zugangsnetz ein nach "General Packet Radio Service"-Vorgaben arbeitendes Mobilfunknetz GPRS dargestellt. Dieses Zugangsnetz GPRS beinhaltet eine erste GPRS-Gateway-Vermittlungsstelle GGSN1 (GGSN = Gateway GPRS Support Node), welche über eine nach dem SIP-Standard arbeitende erste Signalverbindung SIP1 mit einem ersten Kommunikationsendgerät UE1 verbindbar ist. Weiterhin weist das Zugangsnetz eine zweite GPRS-Gateway-Vermittlungsstelle GGSN2 auf, die über eine nach dem SIP-Standard arbeitende zweite Signalverbindung SIP2 mit einem zweiten Kommunikationsendgerät UE2 verbindbar ist. Bei dem ersten Kommunikationsendgerät UE1 und dem zweiten Kommunikationsendgerät UE2 kann es sich z.B. um Mobiltelefone, Laptops oder Palmtops mit Mobilfunkmodul handeln. Die erste GPRS-Gateway-Vermittlungsstelle GGSN1 und die zweite GPRS-Gateway-Vermittlungsstelle GGSN2 sind über Datenverbindungen 3 und 4 mit einem "Authentication Authorisation Accounting"-Server AAA des Zugangsnetzes verbunden. Der Server AAA ist über eine Datenverbindung 5 mit einem Heimatregister HSS (HSS = Home Subscriber Server) eines als Dienstnetz IMS arbeitenden "IP Multimedia Core Network Subsystem" verbunden. Über die Datenverbindungen 3, 4 und 5 werden im Verlaufe des Verfahrens Mobilfunkrufnummern (MSISDN) und temporär gültige IP-Adressen der Kommunikationsendgeräte übertragen.

Von dem Dienstnetz IMS ist weiterhin schematisch lediglich eine Vermittlungsstelle S-CSCF (CSCF = Call Session Control Function; S-CSCF = Serving-CSCF) dargestellt, welche einerseits über eine Datenverbindung 7 mit dem Heimatregister HSS und andererseits über Datenverbindungen 9 und 10 mit der ersten GPRS-Gateway-Vermittlungsstelle GGSN1 und der zweiten GPRS-Gateway-Vermittlungsstelle GGSN2 verbunden ist. Über die Datenverbindung 7 werden Informationen zur Nutzerauthentifizierung mit dem Heimatregister HSS ausgetauscht, über die Datenverbindungen 9 und 10 können SIP-Nachrichten an die erste GPRS-Gateway-Vermittlungsstelle GGSN1 und die zweite GPRS-Gateway-Vermittlungsstelle GGSN2 gesendet werden. Mit der Vermittlungsstelle S-CSCF ist ein Kennzeichen-Zeitgeber TT (TT = Token-Timer) verbunden.

Mittels des ersten Kommunikationsendgeräts UE1 kann z.B. eine "IMS Instant Message" genannte Nachricht an das zweite Kommunikationsendgerät UE2 gesendet werden; zuvor ist jedoch eine Registrierung (Anmeldung, Einbuchung) des ersten Kommunikationsendgeräts UE1 und ggf. auch des zweiten Kommunikationsendgeräts UE2 vorzunehmen.

Wenn also ein Nutzer eines Kommunikationsendgerätes Dienste des Dienstnetzes IMS nutzen möchte, so wird dessen Kommunikationsendgerät in das Zugangsnetz eingebucht (das Zugangsnetz ist heute oftmals durch ein sog. "Release 1999"-GPRS-Netzwerk realisiert). Beim Einbuchen in das GPRS-Netz wird eine an sich bekannte GPRS-Nutzer-Authentifizierung durchgeführt, diese nutzt die im Endgerät vorhandene SIM-Karte. Zusätzlich dazu muß sich das Kommunikationsendgerät beim Dienstnetz IMS registrieren und dabei authentifizieren. Beide Prozeduren, die Anmeldung im Zugangsnetz GPRS und die Anmeldung (Registrierung) im Dienstnetz IMS, werden z.B. automatisch beim Einschalten des Endgerätes durchgeführt. Einen wesentlichen Teil des Registrierens bei dem Dienstnetz stellt das Authentifizieren durch das Dienstnetz dar. Dabei wird während des Registrierens des Kommunikationsendgerätes bei dem Dienstnetz ein Nutzer des Kommunikationsendgerätes authentifiziert. Genau betrachtet wird dabei die SIM-Karte des Nutzers, welche in das Kommunikationsendgerät eingelegt ist, erkannt und dadurch auf die Person des Nutzers geschlossen.

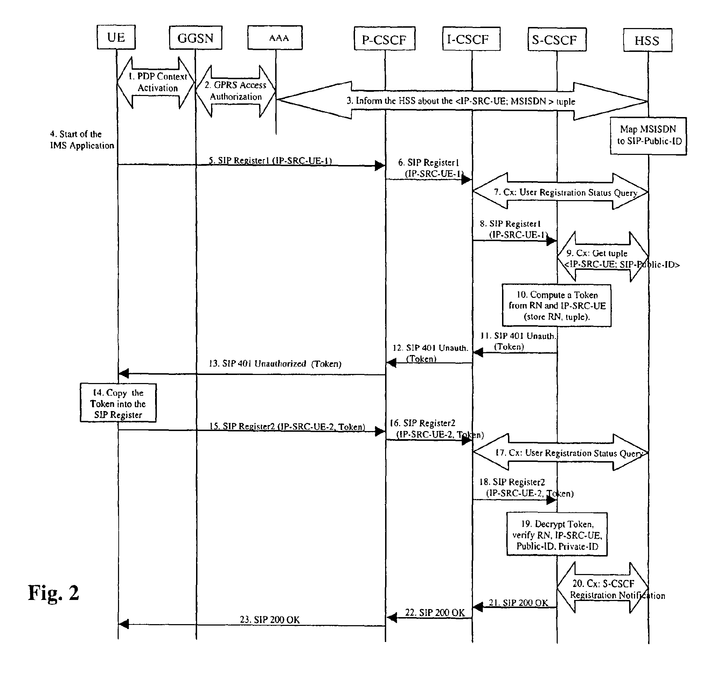

In Figur 2 ist dargestellt, wie eine IMS-Nutzer-Authentifizierung während der IMS-Registrierung durchgeführt wird. Das Ausführungsbeispiel beginnt mit der Einbuchung eines Kommunikationsendgerätes UE (bei dem es sich zum Beispiel um das erste Kommunikationsendgerät UE1 der Figur 1 handeln kann) in ein Zugangsnetz, in diesem Beispiel in ein GPRS Zugangsnetz. Dabei wird eine GPRS-Nutzer-Authentifizierung ausgeführt. Ist diese erfolgreich, wird ein sog. "PDP Context" erzeugt und von der Gateway-GPRS-Vermittlungsstelle GGSN (GGSN = Gateway GPRS Support Node) eine temporäre IP-Adresse IP-SRC-UE an das Kommunikationsendgerät UE vergeben. Diese IP-Adresse erlaubt es anderen Netzteilnehmern, IP-Pakete an das Kommunikationsendgerät zu schicken.

Der Server AAA ermöglicht beim Einbuchungsvorgang in bekannter Weise eine Zugangskontrolle und das Sammeln von Abrechnungsdaten. Während des Einbuchungsvorganges erhält der Server AAA von der Gateway-GPRS-Vermittlungsstelle GGSN die temporäre IP-Adresse IP-SRC-UE des Endgerätes UE sowie die Mobilfunkrufnummer MSISDN (MSISDN = mobile station ISDN number) des Endgerätes UE bzw. eines Nutzers des Endgerätes. GPRSfähicjen Endgeräten bzw. deren Nutzern ist nämlich auch eine Mobilfunkrufnummer MSISDN zugeordnet; unter dieser Mobilfunkrufnummer MSISDN ist das Kommunikationsendgerät im Zugangsnetz GPRS (oder auch innerhalb eines anderen GSM-Mobilfunknetzes) erreichbar.
Diese beiden Parameter temporäre IP-Adresse IP-SRC-UE des Endgerätes UE sowie die Mobilfunkrufnummer MSISDN werden anschließend zu dem Heimatregister HSS des Dienstnetzes IMS übertragen. Die Kommunikation zwischen der Gateway-GPRS-Vermittlungsstelle GGSN und dem Server AAA kann entsprechend den im 3GPP Standard "TS 29.061; Technical Specification 3rd Generation Partnership Project; Technical Specification Group Core Network; Packet Domain; Interworking between the Public Land Mobile Network (PLMN) supporting Packet Based Services and Packet Data Networks (PDN)" insbesondere in Kap. 16.3 beschriebenen Verfahren ablaufen. Alternativ kann das Heimatregister HSS aber auch über eine Schnittstelle direkt mit der an die Gateway-GPRS-Vermittlungsstelle GGSN verbunden werden.

Nach Erhalt der temporären IP-Adresse IP-SRC-UE des Endgerätes UE sowie der Mobilfunkrufnummer MSISDN liest das Heimatregister HSS aus einem Datenspeicher des Dienstnetzes mittels der Mobilfunkrufnummer MSISDN die zur temporären IP-Adresse IP-SRC-UE gehörende öffentliche Kennung "SIP Public User ID" aus. Dies ist möglich, da in dem Datenspeicher im Benutzerprofil eines jeden Nutzers des Dienstnetzes IMS neben dessen öffentlicher Kennung "SIP Public User ID" und dessen privaten Kennung "SIP Private User ID" auch dessen Mobilfunkrufnummer MSISDN eingetragen ist. Damit ist der Einbuchungsvorgang abgeschlossen. Später im Verfahrensablauf wird ein Parameterpaar bestehend aus der IP-Adresse IP-SRC-UE und der öffentlichen Kennung SIP-Public-ID zu einer Dienste-Vermittlungsstelle S-CSCF des Dienstnetzes übertragen werden.

Nach der Einbuchung in das Zugangsnetz GPRS erfolgt eine auf dem Nachrichtenprotokoll SIP basierende IMS-Registrierung des Kommunikationsendgeräts UE bei dem Dienstnetz IMS; diese wird auch kurz als "SIP basierte IMS Registrierung" bezeichnet. Diese IMS-Nutzer-Authentifizierung beinhaltet die Verifikation einer SIP-Adresse des Kommunikationsendgerätes. Dies beinhaltet die Verifikation der SIP Public User ID (öffentliche Kennung) und der SIP Private User ID (private Kennung). Die SIP Public User ID ist die SIP-Adresse des Kommunikationsendgerätes , unter der dieses im Dienstnetz IMS erreichbar ist. Die Verifizierung der SIP Private User ID folgt aus der Verifikation der SIP Public User ID, da es zu jeder SIP Public User ID nur eine SIP Private User ID gibt.
Die Verifikation der SIP Public User ID kann bei der Registrierung des Nutzers im Dienstnetz IMS und bei Nutzung eines IMS-Dienstes durchgeführt werden. Wenn ein Nutzer sein Kommunikationsendgerät UE im Dienstnetz IMS anmeldet, dann sendet das Endgerät eine Nachricht "SIP REGISTER" an das Dienstnetz IMS. Ziel der IMS-Authentifizierung ist die Überprüfung, ob die in dieser Nachricht angegebene SIP Public User ID und die Private User ID korrekt sind. Dazu wird bei dem erfindungsgemäßen Verfahren ein Kennzeichen verwendet, welches vom Dienstnetz IMS zum Endgerät verschickt wird. Dieses Kennzeichen erlaubt eine verifizierbare Bindung des IMS Nutzers an die temporäre IP-Adresse, die während des Einbuchens in das GPRS Netzwerk von der Gateway-GPRS-Vermittlungsstelle GGSN vergeben worden ist. Dieses Verfahren wird im folgenden detailliert beschrieben.

Das Kommunikationsendgerät UE sendet eine erste Registrierungsnachricht "SIP REGISTER1" an das Dienstnetz IMS. Diese erste Registrierungsnachricht "SIP REGISTER1" enthält eine temporäre IP-Adresse IP-SRC-UE-1 des Endgerätes UE. Diese muß aber nicht zwangsläufig der Anmelde-IP-Adresse IP-SRC-UE entsprechen, die das Endgerät UE während der Einbuchung in das Zugangsnetz GPRS zugeteilt bekommen hat. Ein unredlicher Nutzer könnte z.B. die Software des Endgerätes UE so manipulieren, dass die erste Registrierungsnachricht "SIP REGISTER1" eine gefälschte temporäre IP-Adresse IP-SRC-UE-1' enthält. Die erste Registrierungsnachricht "SIP REGISTER1" wird über weitere Vermittlungsstellen P-CSCF (P-CSCF = Proxy-CSCF) und I-CSCF (I-CSCF = Interrogating-CSCF) zu der Vermittlungsstelle S-CSCF des Dienstnetzes IMS geleitet (Pfeile 5 bis 8).

Wenn die erste Registrierungsnachricht "SIP REGISTER1" bei der Vermittlungsstelle S-CSCF eintrifft, dann fordert die Vermittlungsstelle S-CSCF das aus der Anmelde-IP-Adresse IP-SRC-UE und der öffentlichen Kennung SIP-Public-ID bestehende Parameterpaar <IP-SRC-UE; SIP-Public-ID> von dem Heimatregister HSS an (wenn dieses Parameterpaar nicht schon auf Grund von früheren Verfahrensabläufen dort vorhanden ist). Anschließend generiert die Vermittlungsstelle S-CSCF ein Kennzeichen (Token), wenn ein solches Token nicht schon bereits auf Grund von früheren Verfahrensabläufen existiert. Das Token wird durch die Verschlüsselung der temporären IP-Adresse IP-SRC-UE und einer Zufallszahl RN, die auch als "Registration Number" bezeichnet wird, erzeugt. Die Zufallszahl RN wird von der Vermittlungsstelle S-CSCF generiert und weist z.B. eine Länge von 64 Bit oder mehr auf - je nach der erforderlichen Sicherheit des Tokens. Für die Verschlüsselung des Tokens wird ein Schlüssel genutzt, dieser Schlüssel kann entweder für alle Nutzer gleich oder nutzerindividuell verschieden sein. Im letzteren Fall kann der Schlüssel vorteilhafterweise bei den nutzerspezifischen Daten im Heimatregister HSS gespeichert werden und z.B. gemeinsam mit der Nachricht entsprechend Pfeil 9 zu der Vermittlungsstelle S-CSCF übertragen werden. Zur Verschlüsselung kann beispielsweise der MD5 Algorithmus, beschrieben in der IETF Druckschrift RFC 1321, verwendet werden.
Nach der Erzeugung des Kennzeichens (Token) wird entweder das Kennzeichen selbst oder aber ein Daten-Tripel <RN, IP-SRC-UE; SIP-Public-ID> bestehend aus der Zufallszahl RN, der Anmelde-IP-Adresse IP-SRC-UE und der öffentlichen Kennung SIP-Public-ID in der lokalen Datenbank der Vermittlungsstelle S-CSCF gespeichert. Anschließend wird als Antwortnachricht auf die erste Registrierungsnachricht "SIP REGISTER1" die Transportnachricht "SIP 401 UNAUTHORIZED" generiert. Diese Transportnachricht wird genutzt, um das Kennzeichen (Token) von der Vermittlungsstelle S-CSCF zum Endgerät UE zu transportieren (Pfeile 11-13). Das Token kann dabei beispielsweise in einem "RAND/RES" - Feld dieser Transportnachricht transportiert werden.
Die Transportnachricht SIP 401 UNAUTHORIZED wird mit genau der temporären IP-Adresse IP-SRC-UE, die sich verschlüsselt in dem Token befindet, adressiert. Das CPRS-Zugangsnetzwerk sichert, daß diese Transportnachricht SIP 401 UNAUTHORIZED nur an das "richtige" Endgerät ausgeliefert wird, das heißt an dasjenige Endgerät UE, welches bei der Einbuchung in das GPRS Zugangsnetzwerk die temporäre IP-Adresse IP-SRC-UE erhalten hat. Die Vergabe der temporären IP-Adressen im Zugangsnetz GPRS ist eindeutig, das heißt, zu jedem Zeitpunkt kann jede IP-Adresse nur einem einzigen Endgerät zugeordnet sein.

Wenn in unredlicher Absicht oder aufgrund eines Fehlers von dem Kommunikationsendgerät UE als erste Registrierungsnachricht SIP-REGISTER1 eine manipulierte Registrierungsnachricht abgesendet wird (Pfeil 5), die eine falsche (gefälschte) öffentliche Kennung SIP Public User ID' enthält oder eine falsche temporäre IP-Adresse IP-SRC-UE' enthält, die nicht mit der dem Kommunikationsendgerät UE von der Gateway-GPRS-Vermittlungsstelle GGSN zugewiesenen temporären IP-Adresse IP-SRC-UE übereinstimmt, dann wird das Kommunikationsendgerät UE die Transportnachricht SIP 401 UNAUTHORIZED mit dem Kennzeichen nicht erhalten. Dieses Token wird jedoch im weiteren für eine erfolgreiche Registrierung (Einbuchung) in das Dienstnetz IMS benötigt werden.

Nach Erhalt der Antwortnachricht SIP 401 UNAUTHORIZED wird die SIP-Registrierung fortgeführt und eine zweite Registrierungsnachricht "SIP REGISTER2" durch das Endgerät UE generiert. Das Kennzeichen (Token), das mit der Transportnachricht SIP 401 UNAUTHORIZED empfangen wurde, wird unmodifiziert in diese zweite Registrierungsnachricht "SIP REGISTER2" kopiert (Schritt 14). Anschließend wird diese zweite Registrierungsnachricht "SIP REGISTER2" an die Vermittlungsstelle S-CSCF des Dienstnetzes IMS übertragen (Pfeile 15, 16 und 18). Darüber hinaus wird das Kennzeichen auf dem Endgerät UE gespeichert, so daß es in einige oder alle darauf folgende Registrierungs-Nachrichten, die von diesem Endgerät gesendet werden, eingefügt werden kann.

Wenn die Vermittlungsstelle S-CSCF die zweite Registrierungsnachricht "SIP REGISTER2" mit dem Kennzeichen erhält, wird in Abhängigkeit von einer in der Vermittlungsstelle S-CSCF gespeicherten, vorgewählten Vergleichsmethode entweder:
- das Kennzeichen aus der zweiten Registrierungsnachricht "SIP REGISTER2" mit dem in der Vermittlungsstelle S-CSCF gespeicherten Kennzeichen verglichen, oder
- das Kennzeichen entschlüsselt und die daraus erhaltenen Parameter Zufallszahl RN und Anmelde-IP-Adresse IP-SRC-UE mit dem entsprechenden Eintrag <RN, IP-SRC-UE; SIP-Public-ID> in der Datenbank der Vermittlungsstelle S-CSCF verglichen.

Anschließend wird die öffentliche Kennung SIP Public User ID aus der zweiten Registrierungsnachricht "SIP REGISTER2" mit der diesem Kennzeichen zugeordneten SIP Public User ID beziehungsweise mit der in dem entsprechenden Daten-Tripel <RN, IP-SRC-UE, SIP-Public-ID> der Vermittlungsstellen-Datenbank gespeicherten öffentlichen Kennung SIP Public User ID verglichen. Zusätzlich kann die private Kennung SIP Private User ID aus der zweiten Registrierungsnachricht "SIP REGISTER2" mit der für die öffentliche Kennung SIP Public User ID im Nutzerprofil gespeicherten privaten Kennung SIP Private User ID verglichen werden.
Das Kommunikationsendgerät UE (bzw. der entsprechnede IMS-Nutzer) gilt als authentifiziert, wenn 1)
das Kennzeichen (Token) aus der zweiten Registrierungsnachricht "SIP REGISTER2" mit dem auf der Vermittlungsstelle S-CSCF gespeicherten Token übereinstimmt, und/oder
die für dieses Kennzeichen auf der Vermittlungsstelle S-CSCF gespeicherte öffentliche Kennung SIP Public User ID mit der öffentlichen Kennung SIP Public User ID aus der zweiten Registrierungsnachricht "SIP REGISTER2" übereinstimmt und/oder die für diese öffentliche Kennung SIP Public User ID auf der Vermittlungsstelle S-CSCF gespeicherte private Kennung SIP Private User ID mit der privaten SIP Private User ID aus der zweiten Registrierungsnachricht "SIP REGISTER2" übereinstimmt.

Das Kommunikationsendgerät UE (bzw. der entsprechende IMS-Nutzer) gilt ebenfalls als authentifiziert, wenn 2)
- für die aus dem Kennzeichen der zweiten Registrierungsnachricht "SIP REGISTER2" entschlüsselten Parameter Zufallszahl RN und Anmelde-IP-Adresse IP-SRC-UE ein passender <RN, IP-SRC-UE; SIP-Public-ID> Eintrag in der Datenbank der Vermittlungsstelle S-CSCF existiert, die in diesem Eintrag gespeicherte öffentliche Kennung SIP Public User ID mit der SIP Public User ID aus der zweiten Registrierungsnachricht "SIP REGISTER2" übereinstimmt und/oder die für diese öffentliche Kennung SIP Public User ID auf der Vermittlungsstelle S-CSCF gespeicherte private Kennung SIP Private User ID mit der privaten Kennung SIP Private User ID aus der zweiten Registrierungsnachricht "SIP REGISTER2" übereinstimmt.

Falls eines der unter 1) oder eines der unter 2) genannten Kriterien nicht zutrifft, kann die IMS Nutzer Authentifizierung als erfolglos erkannt werden und damit als gescheitert gelten. Zusätzlich zu den genannten Kriterien kann auch die Übereinstimmung der temporären IP-Adresse IP-SRC-UE-2, die in der zweiten Registrierungsnachricht "SIP REGISTER2" übertragen wurde, mit der für den entsprechenden Nutzer bzw. das entsprechende Endgerät UE auf der Vermittlungsstelle S-CSCF gespeicherten Anmelde-IP-Adresse IP-SRC-UE verglichen werden. Nach der Nutzer-Authentifizierung auf der Vermittlungsstelle S-CSCF wird dem Endgerät UE das Ergebnis dieser Authentifizierung mitgeteilt. In diesem Beispiel wird eine erfolgreiche Authentifizierung angenommen. Dieses wird dem Endgerät bzw. dem Nutzer durch eine Informationsnachricht SIP 200 OK mitgeteilt, die von der Vermittlungsstelle S-CSCF an das Endgerät UE gesendet wird (Pfeile 21-23). Zusätzlich wird das Heimatregister HSS über die erfolgreiche Authentifizierung des Nutzers informiert.

Um bei der IMS-Nutzer-Authentifizierung auf der Vermittlungsstelle S-CSCF die Suche nach dem zugehörigen Kennzeichen (Token) oder dem zugehörigen Datensatz-Eintrag <RN, IP-SRC-UE; SIP-Public-ID> zu beschleunigen, kann z.B. ein Indexverfahren bei der Vermittlungsstellen-Datenbank genutzt werden. Der dazu benötigte Datenbankindex läßt sich z.B. aus dem Kennzeichen selbst oder aus den Kennzeichen-daten (Tokenparametern) erstellen.

Bei dem in der Figur 2 dargestellten Beispiel wird das Kennzeichen in der Vermittlungsstelle S-CSCF generiert. Dadurch wird vorteilhafterweise eine Belastung des Heimatregisters HSS vermieden, da auf dem Heimatregister HSS keine Zufallszahlen erzeugt und auch keine Verschlüsselungs- und Entschlüsselungs-Operationen durchgeführt werden brauchen. Das Heimatregister HSS kann somit eine große Anzahl von Nutzern unterstützen. Alternativ könnten die Kennzeichen (Token) aber auch durch das Heimatregister HSS generiert werden. Ein oder mehrere Token würden dann im Schritt 9 der Figur 2 vom Heimatregister HSS auf die Vermittlungsstelle S-CSCF geladen werden. Die Übertragung von mehreren Token ist vorteilhaft, wenn sog. IMS-Re-Registrierungen unterstützt werden. Diese werden später genauer erläutert. Wenn die Token durch das Heimatregister HSS generiert werden, entfällt die Tokengenerierung auf der Vermittlungsstelle S-CSCF in Schritt 10 in Figur 2. Die Token werden jedoch auch in diesem alternativen Fall auf der Vermittlungsstelle S-CSCF gespeichert, so daß der in Schritt 19 der Figur 2 erforderliche Vergleich der Token ohne nochmalige Befragung des Heimatregister HSS erfolgen kann. Der weitere Verlauf der IMS-Nutzer-Authentifizierung ist bei dieser alternativen Ausgestaltung des Verfahrens identisch zu dem Beispiel in Figur 2. Die Generierung der Token im Heimatregister HSS hat den Vorteil einer Entlastung der Vermittlungsstelle S-CSCF, da in diesem Fall die Vermittlungsstelle S-CSCF keine Zufallszahlen erzeugen und keine Verschlüsselungs- und Entschlüsselungs-Operationen durchführen muß. Zudem ermöglicht diese Variante einen relativ unaufwendigen späteren Umstieg auf eine sog. "3GPP Standard UMTS AKA"-Authentifizierung (AKA = Authentication and key agreement).

Ein wesentlicher Gedanke des beschriebenen Verfahrens besteht also darin, daß das Kennzeichen (Token) für die temporäre IP-Adresse IP-SRC-UE nur an dasjenige Endgerät zugestellt wird, welches diese IP-Adresse von der Gateway-GPRS-Vermittlungsstelle GGSN zugewiesen bekommen hat. Dies ist durch das Routing im GPRS Zugangsnetz sichergestellt. Zudem sichert die Verschlüsselung aller Nachrichten bei der Übertragung über die Luftschnittstelle, daß das Token nicht durch andere GPRS Endgeräte abgehört werden kann. Die Verwendung einer Zufallszahl bei der Tokenerzeugung verhindert, daß das Token (Kennzeichen) von einem anderen Endgerät, daß zu einem späteren Zeitpunkt zufällig die gleiche temporäre IP-Adresse zugewiesen bekommt, in unredlicher Absicht genutzt werden kann.

Die Dauer der IMS Registrierung (IMS-Registrierungsdauer) wird durch das Dienstnetz IMS vorgegeben und wird also z.B. durch einen Operator des Dienstnetzes IMS vorbestimmt. Diese Dauer wird dem Endgerät während der erfolgreichen IMS-Registrierung mitgeteilt. Um die IMS-Registrierung für einen längeren Zeitraum aufrecht zu erhalten, muß sich das Kommunikationsendgerät UE vor dem Ablauf der IMS-Registrierungsdauer erneut registrieren. Dies wird als Re-Registrierung bezeichnet. Die Re-Registrierung wird z.B. in periodischen Abständen automatisch durch das Endgerät durchgeführt. Um die Sicherheit zu erhöhen, kann dabei auch die IMS-Nutzer-Authentifizierung auf der Basis eines neuen Tokens erneut durchgeführt werden.

Das Kennzeichen (TOKEN) ist nur für eine bestimmte Dauer (Gültigkeitsdauer des Kennzeichens) gültig. Die Gültigkeitsdauer des Kennzeichens kann der IMS- Registrierungsdauer entsprechen, sie kann aber beispielsweise auch größer sein. Auf der Vermittlungsstelle S-CSCF wird für jedes in Nutzung befindliche Kennzeichen ein Zeitgeber (Kennzeichen-Zeitgeber, Tokentimer) verwaltet. Der Kennzeichen-Zeitgeber wird gestartet, wenn das Kennzeichen das erste Mal an das Endgerät UE verschickt wird (Pfeil 11 der Figur 2). Mit der gleichen Nachricht (Pfeil 11) wird gemeinsam mit dem Kennzeichen die IMS-Registrierungsdauer übertragen.

Läuft der Tokentimer aus (d.h. ist die vorbestimmte Gültigkeitsdauer des Kennzeichens überschritten), so können mit dem Kommunikationsendgerät UE keine weiteren IMS-Dienste mehr genutzt werden und das Kommunikationsendgerät UE muß wieder neu bei der Vermittlungsstelle S-CSCF registriert werden. Eine solche Re-Registrierung unterscheidet sich von einer Erst-Registrierung dadurch, daß die dabei gesendete (erste) Registrierungsnachricht SIP REGISTER bereits ein gültiges Token enthält. Um sog. Denial-of-Service Angriffe auf die IMS-Registrierung zu vermeiden, wird ein existierendes Kennzeichen, dessen Kennzeichen-Zeitgeber noch nicht abgelaufen ist, in der Regel nur dann durch ein neues Kennzeichen ersetzt, wenn die beiden folgenden Bedingungen erfüllt sind:
1) Die SIP REGISTER Nachricht enthält das bereits bei der Vermittlungsstelle S-CSCF vorliegende Token und das jeweilige Kommunikationsendgerät UE (bzw. dessen Nutzer) ist erfolgreich authentifiziert worden (d.h. die öffentliche Kennung SIP Public User ID und die private Kennung SIP Private User ID in der Re-Registrierungsnachricht sind korrekt), und
2) der Kennzeichen-Zeitgeber würde vor der nächsten Re-Registrierung auslaufen.

In Abhängigkeit von der bestehenden Registrierungsdauer und der verbleibenden Zeit bis zum Ablauf des Kennzeichen-Zeitgebers kann die Vermittlungsstelle S-CSCF alternativ dazu auch die IMS-Registrierungsdauer verkürzen (indem sie in der entsprechenden Nachricht [Pfeil 11] dem Kommunikationsendgerät eine kürzere IMS-Registrierungsdauer mitteilt), so daß auch die Nachricht SIP REGISTER der folgenden Re-Registrierung vor Ablauf des Kennzeichen-Zeitgebers auf der Vermittlungsstelle S-CSCF eintrifft. In beiden Fällen wird der mögliche Verlust von SIP Signalisierungsnachrichten dadurch berücksichtigt, dass die Zeitintervalle mit einem zusätzlichen Sicherheitspuffer versehen werden.

Wenn die beiden oben genannten Bedingungen 1) und 2) erfüllt sind, wird das existierende Kennzeichen bzw. der entsprechende Eintrag <RN, IP-SRC-UE; SIP-Public-ID> auf der Vermittlungsstelle S-CSCF gelöscht. Anschließend wird eine gleichartige IMS-Registrierung und IMS-Nutzer- Authentifizierung durchgeführt, wie sie bei einem erstmaligen Verfahrensablauf erfolgen würde. Die Vermittlungsstelle S-CSCF kann dabei auch ein bereits vorhandenes neues Kennzeichen verwenden, wenn ein solches für diese temporäre IP-Adresse (IP-SRC-UE) vorhanden ist. Dies könnte z.B. der Fall sein, wenn im Schritt 9 in Figur 2 mehrere Kennzeichen vom Heimatregister HSS zur Vermittlungsstelle S-CSCF übermittelt worden sind.
Wenn die oben genannte Bedingung 1) erfüllt ist, die Bedingung 2) jedoch nicht, so kann das existierende Kennzeichen auch weiter genutzt werden. Hierzu wird die SIP REGISTER Nachricht mit einer Antwortnachricht SIP 200 OK beantwortet, wie es in den Schritten 21 bis 23 der Figur 2 dargestellt ist.
Bei Auslaufen des Kennzeichen-Zeitgebers wird das zugehörige Token bzw. der entsprechende Eintrag <RN, IP-SRC-UE; SIP-Public-ID> auf der Vermittlungsstelle S-CSCF gelöscht. Eine erneuter Registrierungsversuch, mit oder ohne Token, wird dann wie eine erstmalige Registrierung behandelt.

Das beschriebene Verfahren erfordert vorteilhafterweise keine neuen Schnittstellen oder Netzelemente bei bereits bestehenden Zugangsnetzen GPRS. Es kann einfach und damit preisgünstig durch Anpassungen der Software der Vermittlungsstelle S-CSCF und des Endgerätes UE realisiert werden.

Das beschriebene Verfahren ermöglicht eine sichere und zuverlässige Authentifizierung von Nutzern von Dienstnetzen. Für den Dienstnutzer ist besonders vorteilhaft, dass dieser sich auf eine sehr bequeme Art und Weise registrieren lassen kann, ohne sich beispielsweise mit einem Paßwort anmelden zu müssen. Weiterhin ist besonders vorteilhaft, dass das beschriebene Verfahren mit den heute gebräuchlichen sog. "Release 1999"-GPRS-Netze als Zugangsnetze für Dienstnetze IMS zur sicheren Authentifizierung von IMS-Nutzern angewendet werden kann.

Mit dem beschriebenen Verfahren kann vorteilhafterweise verhindert werden, daß Registrierungs-Nachrichten, welche z.B. in unredlicher Absicht mit einer falschen IP-Adresse oder einer falschen SIP Public User ID versendet werden, zu einer fehlerhaften Authentifizierung und Registrierung führen.

Ein wesentlicher Aspekt des Verfahrens besteht darin, daß bei der IMS-Registrierung ein Kennzeichen durch Adressierung mit einer bestimmten temporären IP-Adresse an dasjenige Endgerät gesendet wird, das diese bestimmte temporäre IP-Adresse wirklich besitzt. Dies wird durch die Routing-Mechanismen des Zugangsnetzes (z.B. eines GPRS-Netzes) sichergestellt. Sollte ein Endgerät eine temporäre IP-Adresse während der Registrierung nur vorgetäuscht haben, erhält es also dieses Kennzeichen nicht. Das Kennzeichen wird jedoch für eine erfolgreiche IMS-Registrierung benötigt. Im Dienstnetz (z.B. in einem IP Multimedia System IMS) erlaubt das Kennzeichen die Verifizierung der temporären IP-Adresse. Dies wiederum erlaubt dann eine sichere Identifizierung der öffentlichen Kennung SIP Public User ID und der privaten Kennung SIP Private User ID, die auf Informationen der Vermittlungsstelle GGSN und des Heimatregisters HSS basiert.

Das Dienstnetz IMS (IP Multimedia Subsystem) als solches ist bekannt und beispielsweise in der Druckschrift "TS 23.228 V5.4.1 (2002-04); 3rd Generation Partnership Project; Technical Specification Group Services and System Aspects; IP Multimedia Subsystem (IMS); Stage 2 (Release 5)" beschrieben. Das beschriebene Verfahren ermöglicht eine zuverlässige Identifizierung des IMS-Nutzers auch in dem Fall, daß das Dienstnetz IMS an ein heute gebräuchliches "Release 1999"-GPRS-Netzwerk angeschlossen wird bzw. daß existierende "Release 1999"-Endgeräte genutzt werden, die z.B. keine ISIM-Karte aufweisen.

## Patentansprüche

1. Verfahren zum Registrieren eines Kommunikationsendgeräts (UE) bei einem einen Kommunikationsdienst organisierenden Dienstnetz (IMS), wobei ein kommunikationsendgeräteseitiger (UE) Zugriff auf das Dienstnetz (IMS) über ein das Kommunikationsendgerät (UE) mit dem Dienstnetz (IMS) verbindendes Zugangsnetz (GPRS) erfolgt, bei dem
- in einem Vorausschritt eine Anmelde-IP-Adresse (IP-SRC-UE), welche bei einem Anmelden des Kommunikationsendgeräts (UE) bei dem Zugangsnetz (GPRS) dem Kommunikationsendgerät (UE) zugeordnet wurde, von dem Dienstnetz (IMS) empfangen und in diesem für den jeweiligen Nutzer des Kommunikationsendgerätes abgespeichert wird,
- bei Empfang einer von dem Kommunikationsendgerät (UE) gesendeten ersten Registrierungsnachricht (SIP Register 1) ein Kennzeichen (TOKEN) mittels einer Transportnachricht (SIP 401 UNAUTHORIZED), die mit der Anmelde-IP-Adresse (IP-SRC-UE) adressiert wird, zu dem Kommunikationsendgerät (UE) übertragen wird, wobei das Kennzeichen (TOKEN) von dem Dienstnetz (IMS) aus der Anmelde-IP-Adresse (IP-SRC-UE) und einer Zufallszahl (RN) mittels eines Verschlüsselungsverfahrens erzeugt wurde und zu dem Kennzeichen (TOKEN) gehörende Kennzeichen-Daten (RN, IP-SRC-UE, SIP-Public-ID) in dem Dienstnetz abgespeichert wurden,
- bei Empfang einer von dem Kommunikationsendgerät (UE) gesendeten zweiten Registrierungsnachricht (SIP Register2), welche das Kennzeichen enthält, von dem Dienstnetz (IMS) das empfangene Kennzeichen mit den Kennzeichen-Daten verglichen wird,
- bei Übereinstimmung des Kennzeichens mit den Kennzeichen-Daten ein erfolgreiches Registrieren erkannt wird, und
- bei Nicht-Übereinstimmung des Kennzeichens mit den Kennzeichen-Daten ein erfolgloses Registrieren erkannt wird.

2. Verfahren nach Anspruch 1,
**dadurch gekennzeichnet , dass**
- in dem Dienstnetz (IMS) als Kennzeichen-Daten das Kennzeichen (Token) abgespeichert wird,
- bei dem Vergleich des empfangenen Kennzeichens mit den in dem Dienstnetz abgespeicherten Kennzeichen-Daten das empfangene Kennzeichen mit dem abgespeicherten Kennzeichen verglichen wird, und
- bei Übereinstimmung des empfangenen Kennzeichens mit dem abgespeicherten Kennzeichen ein erfolgreiches Registrieren erkannt wird.

3. Verfahren nach Anspruch 1,
**dadurch gekennzeichnet , dass**
- in dem Dienstnetz als Kennzeichen-Daten die Anmelde-IP-Adresse (IP-SRC-UE) und die Zufallszahl (RN) abgespeichert wird,
- nach Empfang der zweiten Registrierungsnachricht (SIP Register2) von dem Dienstnetz (IMS) eine Entschlüsselung des mit dieser zweiten Registrierungsnachricht übertragenen Kennzeichens vorgenommen wird,
- bei dem Vergleich des empfangenen Kennzeichens mit den in dem Dienstnetz abgespeicherten Kennzeichen-Daten die bei der Entschlüsselung zurückgewonnene Anmelde-IP-Adresse (IP-SRC-UE) mit der abgespeicherten Anmelde-IP-Adresse verglichen wird, und
- bei Übereinstimmung der zurückgewonnenen Anmelde-IP-Adresse (IP-SRC-UE) mit der abgespeicherten Anmelde-IP-Adresse ein erfolgreiches Registrieren erkannt wird.

4. Verfahren nach Anspruch 3,
**dadurch gekennzeichnet , dass**
- in dem Vorausschritt die Anmelde-IP-Adresse (IP-SRC-UE), welche bei einem Anmelden des Kommunikationsendgeräts (UE) bei dem Zugangsnetz (GPRS) dem Kommunikationsendgerät (UE) zugeordnet wurde, von dem Dienstnetz (IMS) einer öffentlichen Kennung (SIP-Public-ID) des Kommunikationsendgerätes (UE) zugeordnet wird,
- anhand der zurückgewonnenen Anmelde-IP-Adresse (IP-SRC-UE) oder anhand des Kennzeichens die im Dienstnetz gespeicherte, zu der Anmelde-IP-Adresse zugeordnete öffentliche Kennung (SIP-Public-ID) ausgelesen wird,
- nach Empfang der zweiten Registrierungsnachricht (SIP Register2) von dem Dienstnetz eine in dieser zweiten Registrierungsnachricht enthaltene öffentliche Kennung mit der ausgelesenen öffentlichen Kennung (SIP-Public-ID) verglichen wird, und
- nur dann ein erfolgreiches Registrieren erkannt wird, wenn zusätzlich die in dieser zweiten Registrierungsnachricht enthaltene öffentliche Kennung mit der ausgelesenen öffentlichen Kennung (SIP-Public-ID) übereinstimmt.

5. Verfahren nach Anspruch 3 oder 4,
**dadurch gekennzeichnet , dass**
- nach Empfang der zweiten Registrierungsnachricht (SIP Register2) von dem Dienstnetz eine in dieser zweiten Registrierungsnachricht enthaltene private Kennung mit einer im Dienstnetz zusammen mit der öffentlichen Kennung (SIP-Public-ID) abgespeicherten privaten Kennung (SIP-Private-ID) verglichen wird, und
- nur dann ein erfolgreiches Registrieren erkannt wird, wenn zusätzlich die in dieser zweiten Registrierungsnachricht enthaltene private Kennung mit der im Dienstnetz abgespeicherten privaten Kennung (SIP-Private-ID) übereinstimmt.

6. Verfahren nach einem der Ansprüche 1 bis 5,
**dadurch gekennzeichnet , dass**
- vom Dienstnetz ein dem Kennzeichen zugeordneter Kennzeichen-Zeitgeber (TT) bei der Absendung der Transportnachricht (SIP 401 UNAUTHORIZED) gestartet wird, und
- bei Verstreichen einer vorbestimmten Gültigkeitsdauer des Kennzeichens das Kennzeichen als ungültig markiert wird.

7. Verfahren nach einem der vorhergehenden Ansprüche,
**dadurch gekennzeichnet , dass**
- das Kennzeichen (Token) von einer Vermittlungsstelle (S-CSCF) des Dienstnetzes (IMS) erzeugt wird.

8. Verfahren nach einem der Ansprüche 1 bis 6,
**dadurch gekennzeichnet , dass**
- das Kennzeichen (Token) von einem Heimatregister (HSS) des Dienstnetzes (IMS) erzeugt wird.

9. Verfahren nach einem der Ansprüche 3 bis 8,
**dadurch gekennzeichnet , dass**
- das Kennzeichen (Token) von der Vermittlungsstelle (S-CSCF) des Dienstnetzes (IMS) entschlüsselt wird.

10. Verfahren nach einem der vorhergehenden Ansprüche,
**dadurch gekennzeichnet , dass**
- durch eine Vermittlungsstelle (S-CSCF) des Dienstnetzes (IMS) das empfangene Kennzeichen mit den Kennzeichen-Daten verglichen wird,
- durch die Vermittlungsstelle (S-CSCF) bei Übereinstimmung des Kennzeichens mit den Kennzeichen-Daten ein erfolgreiches Registrieren erkannt wird, und
- durch die Vermittlungsstelle (S-CSCF) bei Nicht-Übereinstimmung des Kennzeichens mit den Kennzeichen-Daten ein erfolgloses Registrieren erkannt wird.

## Claims

1. Method for registering a communication terminal (UE) with a service network (IMS) which organizes a communications service, where the service network (IMS) is accessed by the communication terminal (UE) using an access network (GPRS) which connects the communication terminal (UE) to the service network (IMS), in which
- in a preliminary step, a logon IP address (IP-SRC-UE) which was assigned to the communication terminal (UE) when the communication terminal (UE) logged onto the access network (GPRS) is received by the service network (IMS) and is stored therein for the respective user of the communication terminal,
- when a first registration message (SIP Register 1) sent by the communication terminal (UE) is received a token (TOKEN) is transmitted to the communication terminal (UE) using a transport message (SIP 401 UNAUTHORIZED) sent using the logon IP address (IP-SRC-UE), the token (TOKEN) having been produced by the service network (IMS) from the logon IP address (IP-SRC-UE) and a random number (RN) using an encryption method, and token data (RN, IP-SRC-UE, SIP-Public-ID) associated with the token (TOKEN) having been stored in the service network,
- when a second registration message (SIP Register2) which is sent by the communication terminal (UE) and contains the token is received the service network (IMS) compares the token received with the token data,
- successful registration is identified if the token matches the token data, and
- unsuccessful registration is identified if the token does not match the token data.

2. Method according to Claim 1,
**characterized in that**
- the service network (IMS) stores the token (Token) as token data,
- comparison of the received token with the token data stored in the service network involves the received token being compared with the stored token, and
- successful registration is identified if the received token matches the stored token.

3. Method according to Claim 1,
**characterized in that**
- the service network stores the logon IP address (IP-SRC-UE) and the random number (RN) as token data,
- reception of the second registration message (SIP Register2) by the service network (IMS) is followed by decryption of the token transmitted with this second registration message,
- comparison of the received token with the token data stored in the service network involves the logon IP address (IP-SRC-UE) recovered during decryption being compared with the stored logon IP address, and
- successful registration is identified if the recovered logon IP address (IP-SRC-UE) matches the stored logon IP address.

4. Method according to Claim 3,
**characterized in that**
- the preliminary step involves the logon IP address (IP-SRC-UE), which was assigned to the communication terminal (UE) when the communication terminal (UE) logged onto the access network (GPRS), being assigned to a public identifier (SIP-Public-ID) for the communication terminal (UE) via the service network (IMS),
- the recovered logon IP address (IP-SRC-UE) or the token is used to read the public identifier (SIP-Public-ID) which is stored in the service network and is associated with the logon IP address,
- reception of the second registration message (SIP Register2) by the service network is followed by comparison of a public identifier contained in this second registration message with the public identifier (SIP-Public-ID) which has been read, and
- successful registration is identified only if the public identifier contained in this second registration message additionally matches the public identifier (SIP-Public-ID) which has been read.

5. Method according to Claim 3 or 4,
**characterized in that**
- reception of the second registration message (SIP Register2) by the service network is followed by comparison of a private identifier contained in this second registration message with a private identifier (SIP-Private-ID) stored in the service network together with the public identifier (SIP-Public-ID), and
- successful registration is identified only if the private identifier contained in this second registration message additionally matches the private identifier (SIP-Private-ID) stored in the service network.

6. Method according to one of Claims 1 to 5,
**characterized in that**
- the service network starts a token timer (TT) associated with the token when the transport message (SIP 401 UNAUTHORIZED) is sent, and
- the token is marked as invalid if a predetermined validity period for the token elapses.

7. Method according to one of the preceding claims,
**characterized in that**
- the token (Token) is produced by a switching centre (S-CSCF) in the service network (IMS).

8. Method according to one of Claims 1 to 6,
**characterized in that**
- the token (Token) is produced by a home location register (HSS) in the service network (IMS).

9. Method according to one of Claims 3 to 8,
**characterized in that**
- the token (Token) is decrypted by the switching centre (S-CSCF) in the service network (IMS).

10. Method according to one of the preceding claims,
**characterized in that**
- a switching centre (S-CSCF) in the service network (IMS) compares the received token with the token data,
- the switching centre (S-CSCF) identifies successful registration if the token matches the token data, and
- the switching centre (S-CSCF) identifies unsuccessful registration if the token does not match the token data.

## Revendications

1. Procédé pour l'enregistrement d'un terminal de communication (UE) dans le cas d'un réseau de service (IMS) organisant un service de communication, un accès côté terminal de communication (UE) au réseau de service (IMS) s'effectuant par un réseau d'accès (GPRS) reliant le terminal de communication (UE) au réseau de service (IMS), dans lequel
- dans une étape préalable une adresse IP de demande (IP-SRC-UE), qui a été attribuée au terminal de communication (UE) lors d'une demande du terminal de communication (UE) auprès du réseau d'accès (GPRS), est reçue par le réseau de service (IMS) et mémorisée dans celui-ci pour l'utilisateur respectif du terminal de communication,
- en cas de réception d'un premier message d'enregistrement (SIP Register1) envoyé par le terminal de communication (UE), un identificateur (TOKEN) est transmis au terminal de communication (UE) au moyen d'un message de transport (SIP 401 UNAUTHORIZED), qui est adressé avec l'adresse IP de demande (IP-SRC-UE), l'identificateur (TOKEN) ayant été généré par le réseau de service (IMS) à partir de l'adresse IP de demande (IP-SRC-UE) et d'un nombre aléatoire (RN) au moyen d'un procédé de cryptage et des données d'identificateur (RN, IP-SRC-UE, SIP-Public-ID) appartenant à l'identificateur (TOKEN) ayant été mémorisées dans le réseau de service,
- en cas de réception d'un second message d'enregistrement (SIP Register2) envoyé par le terminal de communication (UE), qui contient l'identificateur, l'identificateur reçu est comparé par le réseau de service (IMS) avec les données d'identificateur,
- en cas de concordance de l'identificateur avec les données d'identificateur, un enregistrement réussi est détecté, et en cas de non-concordance de l'identificateur avec les données d'identificateur, un enregistrement sans succès est détecté.

2. Procédé selon la revendication 1,
**caractérisé en ce que**
- l'identificateur (Token) est mémorisé dans le réseau de service (IMS) comme données d'identificateur,
- lors de la comparaison de l'identificateur reçu avec les données d'identificateur mémorisées dans le réseau de service, l'identificateur reçu est comparé avec l'identificateur mémorisé, et
- en cas de concordance de l'identificateur reçu avec l'identificateur mémorisé, un enregistrement réussi est détecté.

3. Procédé selon la revendication 1,
**caractérisé en ce que**
- l'adresse IP de demande (IP-SRC-UE) et le nombre aléatoire (RN) sont mémorisés comme données d'identificateur dans le réseau de service,
- après la réception du second message d'enregistrement (SIP Register2), le réseau de service (IMS) effectue un décryptage de l'identificateur transmis avec ce second message d'enregistrement,
- lors de la comparaison de l'identificateur reçu avec les données d'identificateur mémorisées dans le réseau de service, l'adresse IP de demande (IP-SRC-UE) récupérée lors du décryptage est comparée avec l'adresse IP de demande mémorisée, et
- en cas de concordance de l'adresse IP de demande (IP-SRC-UE) récupérée avec l'adresse IP de demande mémorisée, un enregistrement réussi est détecté.

4. Procédé selon la revendication 3,
**caractérisé en ce que**
- dans l'étape préalable, l'adresse IP de demande (IP-SRC-UE), qui a été attribuée au terminal de communication (UE) lors d'une demande du terminal de communication (UE) auprès du réseau d'accès (GPRS), est attribuée par le réseau de service (IMS) à un indicatif public (SIP-Public-ID) du terminal de communication,
- l'indicatif public (SIP-Public-ID) mémorisé dans le réseau de service et attribué à l'adresse IP de demande, est extrait à l'aide de l'adresse IP de demande (IP-SRC-UE) récupérée ou à l'aide de l'identificateur,
- après la réception du second message d'enregistrement (SIP Register2), le réseau de service compare un indicatif public contenu dans ce second message d'enregistrement avec l'indicatif public (SIP-Public-ID) extrait, et
- un enregistrement réussi est détecté uniquement dans le cas où en supplément l'indicatif public contenu dans ce second message d'enregistrement coïncide avec l'indicatif public (SIP-Public-ID) extrait.

5. Procédé selon la revendication 3 ou 4,
**caractérisé en ce que**,
- après la réception du second message d'enregistrement (SIP Register2) par le réseau de service, un indicatif privé contenu dans ce second message d'enregistrement est comparé avec un indicatif privé (SIP-Private-ID) mémorisé dans le réseau de service ensemble avec l'indicatif public (SIP-Public-ID), et
- un enregistrement réussi est détecté uniquement dans le cas où en supplément l'indicatif privé contenu dans ce second message d'enregistrement coïncide avec l'indicatif privé (SIP-Private-ID) mémorisé dans le réseau de service.

6. Procédé selon l'une quelconque des revendications 1 à 5,
**caractérisé en ce que**
- le réseau de service démarre un rythmeur d'identificateur (TT) attribué à l'identificateur lors de l'envoi du message de transport (SIP 401 UNAUTHORIZED), et
- en cas d'écoulement d'une durée de validité prédéfinie de l'identificateur, l'identificateur est repéré comme non valable.

7. Procédé selon l'une quelconque des revendications précédentes,
**caractérisé en ce que**
- l'identificateur (Token) est généré par un centre de commutation (S-CSCF) du réseau de service (IMS).

8. Procédé selon l'une quelconque des revendications 1 à 6,
**caractérisé en ce que**
- l'identificateur (Token) est généré par un registre de localisation nominal (HSS) du réseau de service (IMS).

9. Procédé selon l'une quelconque des revendications 3 à 8,
**caractérisé en ce que**
- l'identificateur (Token) est décrypté par le centre de commutation (S-CSCF) du réseau de service (IMS).

10. Procédé selon l'une quelconque des revendications précédentes,
**caractérisé en ce que**
- l'identificateur reçu est comparé avec les données d'identificateur par un centre de commutation (S-CSCF) du réseau de service (IMS),
- en cas de concordance de l'identificateur avec les données de l'identificateur, un enregistrement réussi est détecté par le centre de commutation (S-CSCF), et
- en cas de non-concordance de l'identificateur avec les données d'identificateur, un enregistrement sans résultat est détecté par le centre de commutation (S-CSCF).
